# EUROPÄISCHE PATENTSCHRIFT

(11) **EP 2 196 695 B1**
(45) Veröffentlichungstag und Bekanntmachung des Hinweises auf die Patenterteilung: **30.04.2014**
(21) Anmeldenummer: 09177023.0
(22) Anmeldetag: 25.11.2009
(51) Int. Cl.: F16F 9/34, F16F 9/02, F16F 9/32

(54) **Längenverstellbare Gasfeder**
Lengthways' adjustable pneumatic spring
Ressort à gaz réglable en longueur

(30) Priorität: 09.12.2008 DE 102008061213
(43) Veröffentlichungstag der Anmeldung: 16.06.2010
(73) Patentinhaber: SUSPA GmbH, 90518 Altdorf (DE)
(72) Erfinder: Bertrand, Guillaume, 78400, Chatou (FR); Klemke, Sybille, 90518, Altdorf (DE); Schmitt, Sebastian, 91056, Erlangen (DE)
(74) Vertreter: Rau, Albrecht

(56) Entgegenhaltungen:
- EP-A1- 1 526 301
- EP-A1- 1 736 682

## Beschreibung

Die Erfindung betrifft eine längenverstellbare Gasfeder nach dem Obcrbegriff des Anspruches 1.

Derartige Gasfedern mit Dämpfungs-Einheiten zur unterschiedlichen Dämpfung einer Einschub-Bewegung einer Kolbenstange in das Gehäuse und einer Ausschub-Bewegung der Kolbenstange aus dem Gehäuse sind in großer Zahl bekannt. Bei einer aus der EP 1 736 682 A1 bekannten derartigen Gasfeder weist das Ventil einen in Richtung der Mittel-Längs-Achse verschiebbaren Ventil-Stift, einen am Ventil-Stift angebrachten Ventil-Teller, einen ersten Dicht-Sitz und eine mit dem ersten Dicht-Sitz zusammenwirkende erste Dicht-Anlage auf, wobei der erste Dicht-Sitz und die erste Dicht-Anlage mittels des Ventil-Stiftes voneinander abhebbar sind. Weiterhin ist ein am Kolben angeordnetes Zug-Ventil zum Miteinander-Verbinden der Teil-Gehäuseräume bei Aufbringen einer Zugkraft zwischen Kolbenstange und Gehäuse vorgesehen, das einen zweiten Dicht-Sitz und eine mit dem zweiten Dicht-Sitz zusammenwirkende zweite Dicht-Anlage aufweist, wobei der zweite Dicht-Sitz und die zweite Dicht-Anlage bei oiner Erhöhung des Drucks im ersten Teil-Gehäuseraum unter Öffnen des Zug-Ventils voneinander abhebbar sind und wobei das Ventil und das Zug-Ventil eine gemeinsame Schiebe-Büchse aufweisen, die auf dem Ventil-Stift in Richtung der Mittel-Längs-Achse verschiebbar geführt ist und die jeweils entweder die erste oder zweite Dicht-Anlage oder den ersten oder zweiten Dicht-Sitz trägt.

Ein grundsätzliches Problem dieser Dämpfungs-Einheit liegt darin, dass sie relativ aufwändig aufbebaut ist und demzufolge in der Fertigung aufwändig ist. Außerdem kann sie störanfällig sein.

Der Erfindung liegt daher die Aufgabe zugrunde, eine längenverstellbare Gasfeder mit einer Dämpumgs-Einheit im Ventil zu schaffen, wobei die Dämpfungs-Einheit besonders einfach aufgebaut und betriebssicher ist.

Diese Aufgabe wird erfindungsgemäß durch die Merkmale im Kennzeichnungsteil des Anspruches 1 gelöst. Durch die erfindungsgemäße Ausgestaltung wird erreicht, dass sowohl beim Einschieben der Kolbenstange in das Gehäuse als auch beim Ausfahren der Kolbenstange aus dem Gehäuse innerhalb der nur aus zwei Teilen bestehenden Dämpfungs-Einheit exakt definierte Drosselungs Verhältnisse und damit Dämpfungen auftreten. Die sich beim Einfahren oder Ausfahren bildenden freien Durchström-Querschnitte sind unabhängig von der Einschub- bzw. Ausfahr-Geschwindigkeit der Kolbenstange konstant. Der Erfindung liegt der allgemeine Gedanke zugrunde, dass die Strömungsrichtung des in der Gasfeder befindlichen Fluids, wobei es sich sowohl um Öl als auch Gas handeln kann, in Ein- und Ausschubrichtung unterschiedlich ist. Der Öl- bzw. Gasstrom durchströmt eine Steuer-Hülse, die aufgrund der radialen Durchströmung ein Drehmoment erfährt. Da die Steuer-Hülse gegen Verdrehungen gegen die Mittel-Längs-Achse der Gasfeder nicht fixiert ist, wird sie entsprechend gedreht. Die Drehrichtung der Steuer-Hülse hängt von der Strömungsrichtung ab. Beim Einschieben der Kolbenstange in das Gehäuse dreht sich die Steuer-Hülse entgegengesetzt zum Ausfahren der Kolbenstange aus dem Gehäuse. Ein an der Steuer-Hülse angebrachter als Anschlag dienender Vorsprung begrenzt und definiert dabei den Drehwinkel der Steuer-Hülse. Da bei der Durchströmung in der einen Richtung die freien Durchström-Querschnitte anders sind als bei der Durchströmung der Dämpfungs-Einheit in der entgegengesetzten Strömungsrichtung, wird eine asymmetrische Dämpfung erreicht.

Vorteilhafte und zum Teil erfinderische Ausgestaltungen ergeben sich aus den Unteransprüchen.

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: einen Längsschnitt durch eine Gasfeder nach der Erfindung mit geschlossenem Ventil,
- Fig. 2: die Gasfeder in der Darstellung gemäß Fig. 1 mit geöffnetem Ventil,
- Fig. 3: eine vergrößerte Teil-Darstellung des Ventils aus Fig. 2,
- Fig. 4: eine perspektivische Darstellung einer Dämpfungs-Einheit der Gasfeder in einer Drosselungs-Stellung,
- Fig. 5: eine perspektivische Darstellung der Dämpfungs-Einheit in einer anderen Drosselungs-Stellung,
- Fig. 6: einen Querschnitt durch die Dämpfungs-Einheit in der einen Drosselungs-Stellung und
- Fig. 7: die Darstellung gemäß Fig. 6 in der anderen Drosselungs-Stellung.

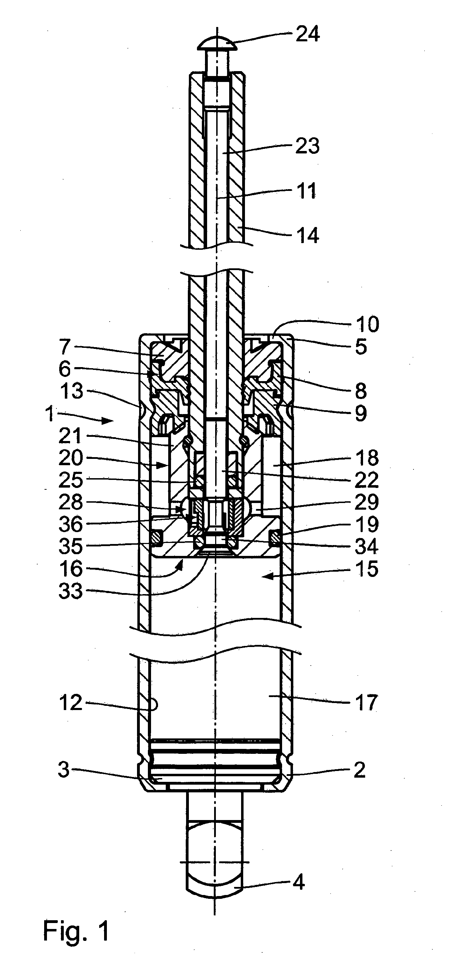

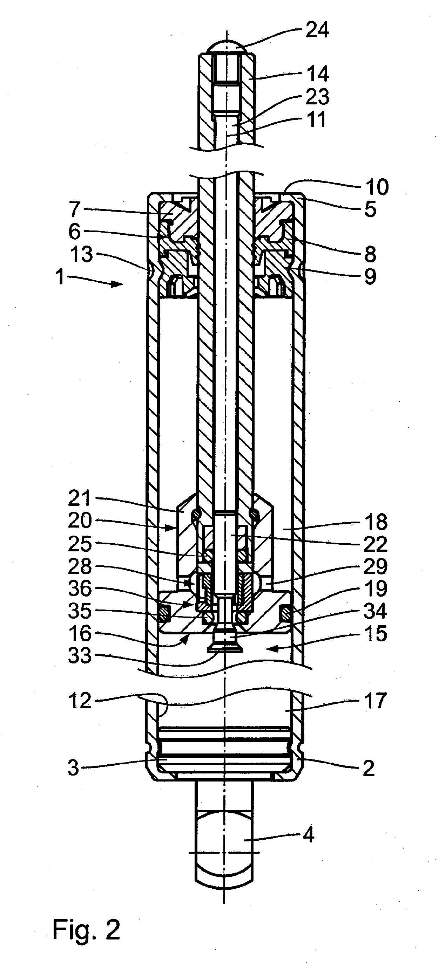

Die in den Fig. 1 und 2 in verschiedenen Arbeitsstellungen dargestellte längenverstellbare blockierbare Gasfeder weist ein im Wesentlichen zylindrisches, aus einem Rohr hergestelltes Gehäuse 1 auf, das an einem ersten Ende 2 mittels eines Bodens 3 gasdicht verschlossen ist, an dem ein Befestigungselement 4 angebracht ist. Am anderen zweiten Ende 5 des Gehäuses 1 ist eine Führungs- und Dichtungs-Einheit 6 vorgesehen, die aus einem Führungsring 7, einer Dichtung 8 und einem Haltering 9 gebildet ist. Der Führungsring 7 ist radial spielfrei im Gehäuse 1 angeordnet und wird mittels eines umgebördelten Randes 10 des Gehäuses 1 in Richtung der Mittel-Längs-Achse 11 des Gehäuses 1 gehalten. Am Führungsring 7 liegt die Dichtung 8 an, die gasdicht gegen die Innenwand 12 des Gehäuses 1 abdichtet. Der Haltering 9 wiederum ist mittels mehrerer Vorsprünge 13 im Gehäuse 1 in Richtung der Achse 11 fixiert und sichert den Führungsring 7 und die Dichtung 8 gegen Verschiebungen in das Gehäuse 1 hinein.

Koaxial zur Achse 11 ist eine Kolbenstange 14 in Richtung der Achse 11 verschiebbar angeordnet, die im Führungsring 7 radial geführt wird und gegen die die Dichtung 8 gasdicht anliegt. Die Kolbenstange 14 ist aus dem zweiten Ende 5 des Gehäuses 1 herausgeführt. An dem im Gehäuse-Innenraum 15 befindlichen Ende der Kolbenstange 14 ist ein Führungs-Kolben 16 angebracht, der an der Innenwand 12 des Gehäuses 1 radial zur Achse 11 geführt ist. Der Kolben 16 unterteilt den Gehäuse-Innenraum 15 in einen dem Boden 3 benachbarten ersten Teil-Gehäuseraum 17 und einen zwischen dem Kolben 16 und der Führungs- und Dichtungs-Einheit 6 befindlichen zweiten Teil-Gehäuseraum 18. Die Teil-Gehäuseräume 17, 18 werden zwischen dem Kolben 16 und der Innenwand 12 mittels einer am Außenumfang des Kolbens 16 befindlichen, gegen die Innenwand 12 gasdicht anliegenden Dichtung 19 gasdicht gegeneinander abgedichtet. Der gesamte Gehäuse-Innenraum 15 ist mit Druckgas gefüllt.

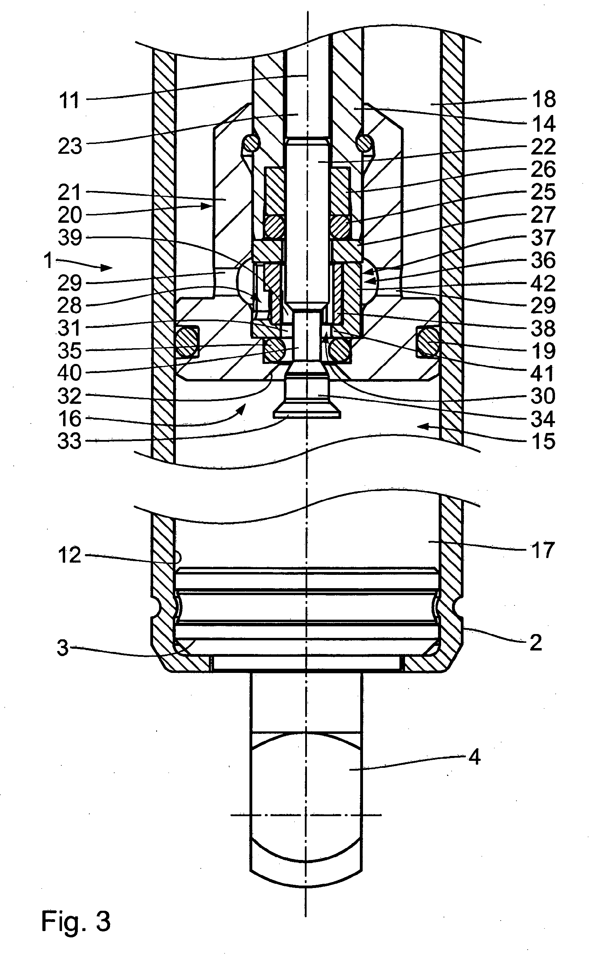

Am Kolben 16 ist ein als betätigbares Ventil ausgebildetes Blockier-Ventil 20 angeordnet, mittels dessen die Teil-Gehäuseräume 17, 18 miteinander verbunden bzw. voneinander getrennt werden können. Hierzu ist an dem scheibenförmigen Führungs-Kolben 16 ein sich zum zweiten Ende 5 hin erstreckendes Ventil-Gehäuse 21 einstückig ausgebildet, in dem ein sich bis zum ersten Teil-Gehäuseraum 17 erstreckender Ventil-Stößel 22 in Richtung der Achse 11 verschiebbar angeordnet ist. Eine Betätigung erfolgt von außen mittels einer Betätigungs-Stange 23, die in der hohl ausgebildeten, also rohrförmigen Kolbenstange 14 verschiebbar geführt ist und aus dieser an deren äußerem freien Ende mit einem Betätigungs-Knopf 24 herausragt. Der Ventil-Stößel 22 ist benachbart zur Betätigungs-Stange 23 mittels einer Dichtung 25 gasdicht nach außen abgedichtet, die zwischen einer Führungsbüchse 26 und einem Anlagering 27 gehalten ist, wie Fig. 3 entnehmbar ist.

Im Ventil 20 ist ein Überström-Kanal 28 ausgebildet, über den die Teil-Gehäuseräume 17, 18 miteinander verbunden bzw. voneinander getrennt werden können. Er weist in den zweiten Teil-Gehäuseraum 18 mündende, am Übergang vom scheibenförmigen Kolben 16 zum Ventil-Gehäuse 21 in letzterem ausgebildete Quer-Kanäle 29 auf, die in einem Ventil-Raum 30 im Ventil-Gehäuse 21 und im Kolben 16 münden. Aus dem Ventil-Raum 30 mündet ein Axial-Kanal 31 in den ersten Teil-Gehäuseraum 17. Hier ist an der dem ersten Teil-Gehäuseraum 17 zugewandten Seite des Kolbens 16 ein Ventilsitz 32 ausgebildet, gegen den ein Ventilteller 33 des Ventil-Stößels 22 in der geschlossenen Stellung des Ventils 16 gemäß Fig. 1 anliegt. Eine Abdichtung erfolgt über einen am Ventil-Stößel 22 benachbart zum Ventilteller 33 ausgebildeten zylindrischen Dichtungsabschnitt 34, der mit einer im Kolben 16 angeordneten Dichtung 35 in Dichtungseingriff kommt und somit bei gemäß Fig. 1 geschlossenem Ventil 20 die Teil-Gehäuseräume 17, 18 gasdicht voneinander trennt. Bei gemäß Fig. 2 und 3 eingedrückter Betätigungs-Stange 23 wird der Ventil-Stößel 22 in Richtung zum ersten Teil-Gehäuseraum 17 hin verschoben, so dass der Dichtungsabschnitt 34 von der Dichtung 35 abgehoben wird, wodurch der Überström-Kanal 28 geöffnet wird.

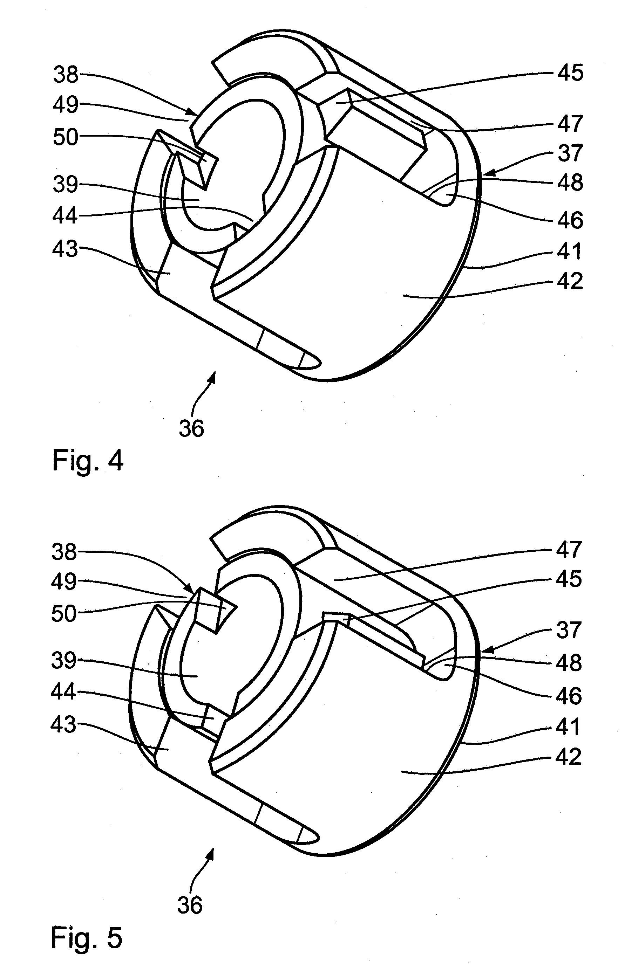

Im Ventil-Raum 30 ist eine aus zwei Teilen bestehende Dämpfungs-Einheit 36 angeordnet. Diese Dämpfungs-Einheit 36 besteht aus einem äußeren topfförmigen Dämpfungs-Gehäuse 37, das ortsfest und undrehbar im Ventil-Gehäuse 21 zwischen der Dichtung 35 und dem Anlagering 27 in axialer Richtung gehalten ist. Im Dämpfungs-Gehäuse 37 ist eine Steuer-Hülse 38 als zweites Teil der Dämpfungs-Einheit 36 angeordnet. Der Axial-Kanal 31 durchdringt auch das Dämpfungs-Gehäuse 37, so dass der nach außen durch die Steuer-Hülse 38 begrenzte Innenraum 39 (siehe Fig. 4 und 5) der Dämpfungs-Einheit 36 Teil des Axial-Kanals 31 ist. Der Ventil-Stößel 22 weist in diesem Bereich einen verjüngten Abschnitt 40 auf.

Das mit seinem ringförmigen Boden 41 gegen die Dichtung 35 anliegende Dämpfungs-Gehäuse 37 weist in seiner ringzylindrischen Wand 42 eine parallel zur Achse 11 verlaufende schlitzförmige äußere Durchström-Öffnung 43 auf (siehe Fig. 4 und 5). Diese äußere Durchström-Öffnung 43 ist zum Ventil-Raum 30 und damit zu den Quer-Kanälen 29 hin offen.

Die Steuer-Hülse 38 weist eine ebenfalls schlitzförmige, parallel zur Achse 11 verlaufende innere Durchström-Öffnung 44 auf, die mit der äußeren Durchström-Öffnung 43 in Überdeckung gebracht werden kann, wie Fig. 4 und 5 entnehmbar ist. Sie kann wiederum durch Verdrehen der Steuer-Hülse 38 um die Achse 11 gegenüber dem Dämpfungs-Gehäuse 37 außer Überdeckung mit der äußeren Durchström-Öffnung 43 gebracht werden, so dass die äußere Durchström-Öffnung 43 teilweise oder ganz verschlossen ist.

Die Steuer-Hülse 38 weist weiterhin einen Vorsprung 45 auf, der als Verdreh-Begrenzung dient und hierzu in eine Ausnehmung 46 in der Wand 42 des Dämpfungs-Gehäuses 37 ragt und die mögliche Verdrehbewegung der Steuer-Hülse 38 durch Anlage an den beiden Wänden 47, 48 begrenzt.

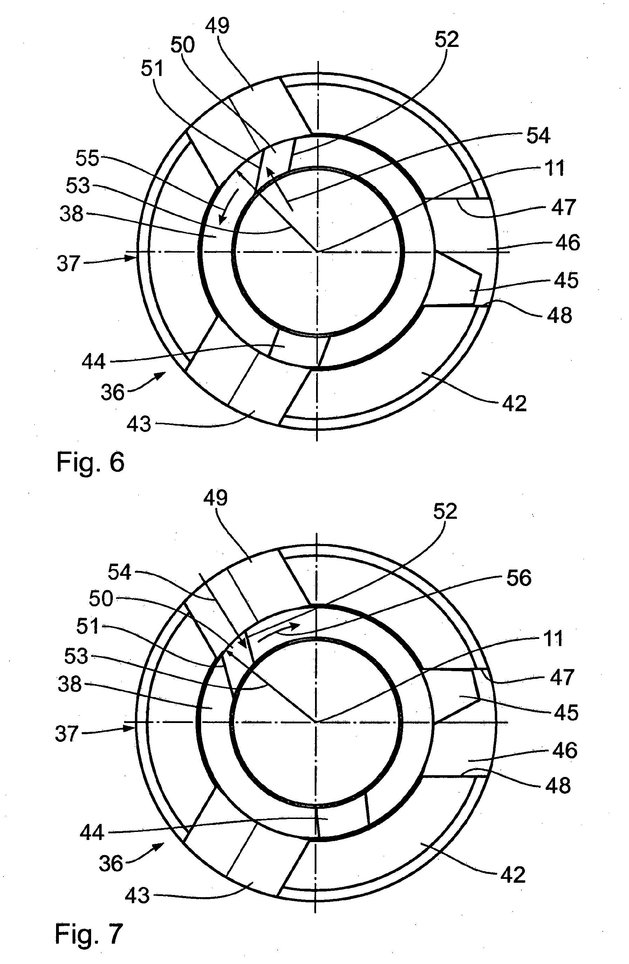

In der Wand 42 des Dämpfungs-Gehäuses 37 ist weiterhin eine Steuerstrom-Öffnung 49 ausgebildet, die einem Steuer-Kanal 50 in der Steuer-Hülse 38 in Überdeckung zugeordnet ist. Dieser Steuer-Kanal 50 wird durch eine erste Steuerfläche 51 und eine zweite Steuerfläche 52 begrenzt. Diese Steuerflächen 51, 52 verlaufen nicht parallel zu einem Radius 53 auf die Achse 11, sondern in Umfangsrichtung geneigt, also tangential geneigt, wie den Fig. 6 und 7 anschaulich entnehmbar ist. Dies hat zur Folge, dass nach dem Öffnen des Ventils 20 durch Einschieben des Ventil-Stößels 22 in Richtung zum ersten Teil-Gehäuseraum 17 bei einer Durchströmung der Dämpfungs-Einheit 36 von innen nach außen die Steuer-Hülse 38 in einer Richtung verdreht wird, während sie bei Durchströmung von außen nach innen in der entgegengesetzter Richtung verdreht wird, wodurch in dem einen Fall - wie erwähnt - die äußere Durchström-Öffnung 43 teilweise oder ganz verschlossen wird, während sie im anderen Fall geöffnet wird. Hierdurch werden also unterschiedliche Dämpfungsverhältnisse erzeugt, je nachdem, ob die Kolbenstange 14 mit Kolben 16 in das Gehäuse 1 hineingeschoben oder aus diesem ausgefahren wird.

Für das dargestellte Ausführungsbeispiel heißt dies konkret folgendes:

Wenn bei geöffnetem Ventil 20 die Kolbenstange 14 in das Gehäuse 1 hineingeschoben wird, wird der Kolben 16 in Richtung zum ersten Teil-Gehäuseraum 17 hin verschoben. Es strömt daher Gas vom ersten Teil-Gehäuseraum 17 durch den Überström-Kanal 28 in Richtung zum zweiten Teil-Gehäuseraum 18. Das Gas durchströmt die Dämpfungs-Einheit 36 von innen, d. h. die erste Steuerfläche 51 wird von dem Gasstrom entsprechend dem Strömungspfeil 54 in Fig. 6 beaufschlagt, so dass die Steuer-Hülse 38 entsprechend der Drehrichtung 55 in Fig. 6 entgegen dem Uhrzeigersinn verdreht wird. Hierdurch kommt der Vorsprung 45 aus seiner in Fig. 6 noch dargestellten Ausgangslage an der Wand 48 der Ausnehmung 46 zur Anlage an der gegenüberliegenden Wand 47, d. h. in die in Fig. 7 dargestellte Anlage. Durch diese Verdrehung kommt die innere Durchström-Öffnung 44 aus ihrer in Fig. 6 noch dargestellten Überdeckung mit der äußeren Durchström-Öffnung 43 heraus in die in Fig. 7 dargestellte Position, so dass die äußere Durchström-Öffnung 43 in der Wand 42 des Dämpfungs-Gehäuses 37 von der Steuer-Hülse 38 verschlossen wird. Es kann jetzt also nur ein stark gedrosselter Gasstrom durch den Steuer-Kanal 50 und die Steuerstrom-Öffnung 49 vom ersten Teil-Gehäuseraum 17 in den zweiten Teil-Gehäuseraum 18 strömen. Die Einschubbewegung der Kolbenstange 14 ist also stark gedämpft.

Wenn dagegen entsprechend Fig. 7 nach dem Öffnen des Ventils 20 die Kolbenstange 14 aus dem Gehäuse 1 ausgefahren wird, dann strömt Druckgas durch die Steuerstrom-Öffnung 49 von außen gegen die zweite Steuerfläche 52 und übt damit auf die Steuer-Hülse 38 ein Drehmoment entsprechend in Drehrichtung 56 in Fig. 7 aus. Die Verdrehung erfolgt in Fig. 7 also im Uhrzeigersinn. Hierdurch wird die Steuer-Hülse 38 so verdreht, dass sie aus ihrer in Fig. 7 dargestellten Ausgangslage in die in Fig. 6 dargestellte Lage kommt. Der Vorsprung 45 kommt aus seiner in Fig. 7 dargestellten Ausgangslage an der Wand 47 zur Anlage an der Wand 48, wie es in Fig. 6 dargestellt ist. Die innere Durchström-Öffnung 44 kommt also zur Überdeckung mit der äußeren Durchström-Öffnung 43, so dass das Druckgas aus dem zweiten Teil-Gehäuseraum 18 auch durch die Durchström-Öffnungen 43, 44 in den ersten Teil-Gehäuseraum 17 strömen kann. Das Ausfahren der Kolbenstange 14 erfolgt also mit deutlich geringerer Dämpfung als das Einschieben der Kolbenstange 14 in das Gehäuse 1.

Bei entsprechender entgegengesetzter Schrägstellung der Steuer-Flächen 51, 52 des Steuer-Kanals 50 werden die Dämpfungsverhältnisse umgekehrt ausgebildet, d. h. die Drosselung ist beim Ausfahren der Kolbenstange 14 aus dem Gehäuse 1 stärker als beim Einfahren.

Die Ausgestaltung kann auch - wie erwähnt - so sein, dass die Verdrehung der Steuer-Hülse 38 derart ist, dass die äußere Durchström-Öffnung 43 nicht vollständig, sondern nur teilweise verschlossen wird.

Weiterhin kann die Dämpfungs-Einheit 36 auch im Ventil einer längenverstellbaren Gasfeder angeordnet werden, das nicht am Kolben, sondern an einem Gehäuseende ausgebildet ist, wie es beispielsweise in der DE 18 12 282 C3 (entspr. US 3,656,593) dargestellt und beschrieben ist.

Desgleichen kann die Dämpfungs-Einheit 36 im Ventil einer Längenverstell-Einheit mit Flüssigkeit gefüllten Teil-Gehäuseräumen verwendet werden, wobei in der Regel ein mit Druckgas gefüllter Ausgleichsraum vorhanden ist.

## Patentansprüche

1. Längenverstellbare Gasfeder
- mit einem Gehäuse (1) mit einer Mittel-Längs-Achse (11),
- mit einer das Gehäuse (1) an einem Ende (5) abschließenden Führungs- und Dichtungs-Einheit (6),
- mit einer abgedichtet durch die Führungs- und Dichtungs-Einheit (6) aus dem Ende (5) des Gehäuses (1) herausgeführten Kolbenstange (14),
- mit einem mit der Kolbenstange (14) verbundenen, im Gehäuse (1) abgedichtet geführten Kolben (16),
- mit einem einseitig vom Kolben (16) begrenzten, mit Fluid gefüllten ersten Teil-Gehäuseraum (17),
- mit einem ebenfalls einseitig vom Kolben (16) begrenzten, mit Fluid gefüllten zweiten Teil-Gehäuseraum (18) und
- mit einem zwischen den Teil-Gehäuseräumen (17, 18) angeordneten, von außerhalb des Gehäuses (1) betätigbaren Ventil (20),
-- das einen zu öffnenden und zu schließenden Überström-Kanal (28) zwischen den Teil-Gehäuseräumen (17, 18) und
-- im Überström-Kanal (28) eine Dämpfungs-Einheit (36) zur unterschiedlichen Dämpfung einer Einschub-Bewegung der Kolbenstange (14) in das Gehäuse (1) und einer Ausschub-Bewegung der Kolbenstange (14) aus dem Gehäuse (1) aufweist,
**dadurch gekennzeichnet,**
- **dass** die Dämpfungs-Einheit (36) ein äußeres Dämpfungs-Gehäuse (37) und eine gegenüber dem Dämpfungs-Gehäuse (37) um die Mittel-Längs-Achse (11) verdrehbare innere Steuer-Hülse (38) aufweist,
- **dass** das Dämpfungs-Gehäuse (37) eine äußere Durchström-Öffnung (43) und die Steuer-Hülse (38) eine innere Durchström-Öffnung (44) aufweist,
- **dass** die Steuer-Hülse (38) bei einer Fluid-Strömung vom ersten Teil-Gehäuseraum (17) in den zweiten Teil-Gehäuseraum (18) in einer erster Drehrichtung (55) in eine erste Endlage verdrehbar ist,
- **dass** die Steuer-Hülse (38) bei einer Fluid-Strömung vom zweiten Teil-Gehäuseraum (18) in den ersten Teil-Gehäuseraum (17) in einer entgegengesetzten zweiten Drehrichtung (57) in eine zweite Endlage verdrehbar ist,
- wodurch die äußere Durchström-Öffnung (43) und die innere Durchström-Öffnung (44) in unterschiedliche Überdeckung bringbar sind.

2. Längenverstellbare Gasfeder nach Anspruch 1, **dadurch gekennzeichnet,**
**dass** die Steuer-Hülse (38) eine erste Steuerfläche (51) aufweist, die bei einer Fluid-Strömung aus dem ersten Teil-Gehäuseraum (17) in den zweiten Teil-Gehäuseraum (18) in der ersten Drehrichtung (55) beaufschlagt wird und
**dass** die Steuer-Hülse (38) eine zweite Steuerfläche (52) aufweist, die bei einer Fluid-Strömung vom zweiten Teil-Gehäuseraum (18) in den ersten Teil-Gehäuseraum (17) in der zweiten Drehrichtung (56) beaufschlagt wird.

3. Längenverstellbare Gasfeder nach Anspruch 1 oder 2, **dadurch gekennzeichnet,**
**dass** die Steuer-Hülse (38) einen in eine Ausnehmung (46) des Dämpfungs-Gehäuses (37) ragenden Vorsprung (45) aufweist und dass die Ausnehmung (46) die erste Endlage und die zweite Endlage definierende Wände (47, 48) als Anlage für den Vorsprung (45) aufweist.

## Claims

1. Length-adjustable gas spring comprising
- a casing (1) having a central longitudinal axis (11);
- a guiding and sealing unit (6) which seals an end (5) of the casing (1);
- a piston rod (14) led out of the end (5) of the casing (1) through the guiding and sealing unit (6) in a sealing manner;
- a piston (16) which is connected to the piston rod (14) and guided in the casing (1) in a sealed manner;
- a first partial casing space (17) which is on one side limited by the piston (16) and is filled with fluid;
- a second partial casing space (18) which is on one side limited by the piston and is filled with fluid as well; and
- a valve (20) which is arranged between the partial casing spaces (17, 18) and is operable from outside the casing (1) which valve (20)
-- has an overflow channel (28) between the partial casing spaces (17, 18) which is adapted to be opened and closed; and
-- a damping unit (36) in the overflow channel (28) for damping an inward movement of the piston rod (14) into the casing (1) and an outward movement of the piston rod (14) out of the casing (1) to different degrees,
**characterized in**
- **that** the damping unit (36) has an outer damping casing (37) and an inner control sleeve (38) which is rotatable about the central longitudinal axis (11);
- **that** the damping casing (37) has an outer flow-through opening (43) and the control sleeve (38) has an inner flow-through opening (44);
- **that** the control sleeve (38) is rotatable in a first direction of rotation (55) into a first end position when there is a fluid flow from the first partial casing space (17) into the second partial casing space (18);
- **that** the control sleeve (38) is rotatable in an opposite second direction of rotation (57) into a second end position when there is a fluid flow from the second partial casing space (18) into the first partial casing space (17),
- allowing the outer flow-through opening (43) and the inner flow-through opening (44) to overlap with each other to various degrees.

2. Length-adjustable gas spring according to claim 1, **characterized in that** the control sleeve (38) has a first control surface (51) which is acted upon in the first direction of rotation (55) when there is a fluid flow from the first partial casing space (17) into the second partial casing space (18); and
that the control sleeve (38) has a second control surface (52) which is acted upon in the second direction of rotation (56) when there is a fluid flow from the second partial casing space (18) into the first partial casing space (17).

3. Length-adjustable gas spring according to claim 1 or 2, **characterized in**
**that** the control sleeve (38) has a protrusion (45) which projects into a recess (46) of the damping casing (37); and
**that** the recess (46) has walls (47, 48) defining the first end position and the second end position as stops for the protrusion (45).

## Revendications

1. Ressort à gaz réglable en longueur
- comprenant un carter (1) comportant un axe longitudinal central (11),
- comprenant une unité de guidage et d'étanchéité (6) terminant le carter (1) à une extrémité (5),
- comprenant une tige (14) de piston conduisant vers l'extérieur en partant de l'extrémité (5) du carter (1) par l'unité de guidage et d'étanchéité (6),
- comprenant un piston (16) étanche, guidé dans le carter (1), relié avec la tige (14) de piston,
- comprenant une première chambre partielle (17) de carter remplie d'un fluide, délimitée d'un côté par le piston (16),
- comprenant une seconde chambre partielle (18) de carter remplie d'un fluide, également délimitée d'un côté par le piston (16),
- comprenant une vanne (20), pouvant être actionnée de l'extérieur du carter (1), agencée entre les chambres partielles (17, 18), vanne qui présente
-- un canal de déversement (28), que l'on peut ouvrir ou fermer, entre les chambres partielles (17, 18), et
-- une unité d'amortissement (36), destinée à l'amortissement différent d'un mouvement d'insertion de la tige (14) de piston dans le carter (1) et d'un mouvement de sortie de la tige (14) de piston dans le carter (1), dans le canal de déversement (28),
**caractérisé en ce**
- **que** l'unité d'amortissement (36) présente un carter d'amortissement (37) externe et un manchon de guidage (38) interne pouvant être en rotation autour de l'axe longitudinal central (11) en face du carter d'amortissement (37),
- **que** le carter d'amortissement (37) présente un orifice de passage (43) externe et que le manchon de guidage (38) présente un orifice de passage (44) interne,
- **que** le manchon de guidage (38) peut être tourné dans une première position finale dans une première direction de rotation (55) lors d'un passage de fluide entre la première chambre partielle (17) et la seconde chambre partielle (18),
- **que** le manchon de guidage (38) peut être tournée dans une seconde position finale dans une seconde direction de rotation (57), opposée, lors du passage de fluide entre la seconde chambre partielle (18) et la première chambre partielle (17),
- moyennant quoi, l'orifice de passage externe (43) et l'orifice de passage interne (44) peuvent se recouvrir de différentes manières.

2. Ressort à gaz réglable en longueur selon la revendication 1, **caractérisé en ce**
**que** le manchon de guidage (38) présente une première surface de guidage (51) qui est mise à contribution dans une première direction de rotation (55) lors d'un passage de fluide partant de la première chambre partielle (17) vers la seconde chambre partielle (18), et
**que** le manchon de guidage (38) présente une seconde surface de guidage (52) qui est mise à contribution dans une seconde direction de rotation (56) lors d'un passage de fluide partant de la seconde chambre partielle (18) vers la première chambre partielle (17).

3. Ressort à gaz réglable en longueur selon les revendications 1 ou 2, **caractérisé en ce**
**que** le manchon de commande (38) présente une avancée (45) dépassant d'une cavité (46) du carter d'amortissement (37) et
**que** la cavité (46) présente des parois (47, 48), définies par la première position finale et la seconde position finale, servant d'appui pour l'avancée (45).
